# EUROPÄISCHE PATENTSCHRIFT

(11) **EP 2 014 736 B1**
(45) Veröffentlichungstag und Bekanntmachung des Hinweises auf die Patenterteilung: **02.03.2011**
(21) Anmeldenummer: 08011894.6
(22) Anmeldetag: 02.07.2008
(51) Int. Cl.: C09J 123/00, C08K 3/00, C08L 23/00

(54) **Baumaterialien auf Polyolefin-Basis**
Construction materials on a polyolefin basis
Matériaux de construction à base de polyoléfine

(30) Priorität: 10.07.2007 DE 102007031967
(43) Veröffentlichungstag der Anmeldung: 14.01.2009
(73) Patentinhaber: Clariant Finance (BVI) Limited, Road Town, Tortola (VG)
(72) Erfinder: Bach, Sebastijan, DI., 86462 Achsheim (DE)
(74) Vertreter: Jacobi, Carola

(56) Entgegenhaltungen:
- EP-A- 1 645 608
- WO-A-2005/093270
- DE-A1- 19 648 895
- DE-A1-102005 059 845

## Beschreibung

Die Erfindung betrifft die Verwendung einer Zusammensetzung, enthaltend a) ein oder mehrere Polyolefine und b) einen oder mehrere anorganische Füllstoffe als Verbindungselement, welches zur Befestigung eines Gegenstandes an einem Bauelement dient.

Stand der Technik ist, Dübel in unterschiedlichsten Ausführungsformen als Verbindungselement einzusetzen, um Gegenstände an Bauelemente, beispielsweise an Mauern oder Wänden zu befestigen. Das Grundprinzip der Verwendung von Dübeln ist, diese in ein dafür vorgesehenes, möglichst passgenau geformtes Bohrloch zu stecken und in den Dübel eine Befestigungsschraube einzudrehen. Durch das Aufspreizen des Dübels klemmen dieser und die Schraube im Bauelement fest. Dübel und Schrauben müssen zwingend zusammenpassen. Werden Schrauben mit zu kleinen Durchmessern verwendet, haben sie keinen ausreichenden Halt. Zu große Schraubendurchmesser passen nicht in den Dübel oder erfordern mehr Kraft beim Einschrauben. Die Festigkeit der Dübel in porösen Baumaterialien, wie Putz oder Isoliermaterial ist oft unzureichend. Oft, z. B. bei Putz oder Mauerwerk schlechter Qualität, ist es schwierig, eine für den Dübel genau passende Bohrung zu setzen.

Aufgabe der vorliegenden Erfindung ist es daher, ein Befestigungsmaterial bereitzustellen, das es unter Vermeidung der genannten Nachteile und in anwendungsfreundlicher Weise ermöglicht, eine halt- und belastbare Befestigung eines Gegenstandes an einem Bauelement, beispielsweise einer Mauer oder einer Wand, beispielsweise bestehend aus Beton, Holz oder Stein, zu erzielen.

Überraschend wurde gefunden, dass diese Aufgabe durch Anwendung spezieller Hot melt-Massen gelöst werden kann.

Dabei wird die Hotmelt-Masse in heißer flüssiger Form in einen im Baumaterial vorhandenen oder vorbereiteten Hohlraum eingespritzt. Der Hohlraum kann z. B. in üblicher Weise mittels einer Bohrung erzeugt werden. Die Schmelze füllt den Hohlraum komplett aus und haftet am Baumaterial durch Benetzung der Innenwand des Hohlraums. Während das Hot melt-Material erstarrt und sich verfestigt, kann in die noch elastische Masse eine Schraube eingedreht werden. Dabei wird ein exakt passendes Innengewinde erzeugt. Die Hot melt-Masse ist nach kurzer Zeit vollständig erstarrt und die Schraube kann voll belastet werden.

Es können dabei Schrauben aus beliebigem Material und mit beliebiger Geometrie verwendet werden. Geeignet sind sowohl Metall- oder Holzschrauben oder Schrauben aus anderem Material. Diese können nach Belieben heraus- und wieder eingedreht werden, ohne ihre Belastungsfähigkeit zu verlieren. Anstelle von Schrauben ist darüber hinaus auch der Einsatz jedweder stabförmigen Halterungen, auch solcher ohne Schraubengewinde, möglich. Das erfindungsgemäße Prinzip ist für jede Art von Baumaterial geeignet, auch und speziell für solches, für das herkömmliche Dübel nicht oder nur eingeschränkt in Frage kommen, z. B. poröses Mauerwerk. Ein weiterer Vorteil der Erfindung besteht darin, dass der die Hot melt-Masse aufnehmende Hohlraum nicht, wie bei Anwendung von Dübeln, von passgenauer Geometrie sein muss.

Erfindungsgemäß enthalten die für das Hot melt-Material geeigneten Zusammensetzungen a) einen oder mehrere Polyolefine und b) einen oder mehrere anorganische Füllstoff/e.

Heißschmelzklebemassen, enthaltend Polyolefine sind aus zahlreichen Schriften bekannt.

So offenbart EP 1 645 608 Polyolefine und deren Verwendung als Schmelzkleber, sowie als Bindemittel für die Herstellung von Straßenmarkierungen.

EP 1 631 641 beschreibt Heißschmelzklebemassen enthaltend Polyolefine, die sich durch ein günstiges Viskositätsverhalten auszeichnen und dadurch leicht sprühbar sind.

In WO 2001/014487 werden Heißschmelzklebemassen als Konstruktionskleber bei der Herstellung von Hygieneartikel offenbart.

In US-A-2006/0100335 werden Kompositionen beschrieben, die aus Ethylen/C₃-C₂₀ Copolymeren oder C₃-C₃₀-Homopolymeren oder Copolymeren und mindestens 40 Gew.-% eines Füllstoffes bestehen, sowie deren verbesserte Verarbeitbarkeit zu gefertigten Artikeln, beispielsweise Folien, Bodenbelägen oder Wandverkleidungen. Hinweise zu Klebeeigenschaften dieser Kompositionen oder deren Verwendung als Heißschmelzklebemassen sind nicht gegeben.

In US-6,300,398 werden Mischungen, enthaltend Ethylencopolymere, Wachs und ein Nukleierungsmittel, sowie deren Verwendung als Heißschmelzklebemasse, offenbart.

Als Nukleierungsmittel sind auch Tonmineralien genannt, bevorzugt sind jedoch organische Verbindungen, insbesondere Acetale. Die Nukleierungsmittel werden in Mengen von 0,1 bis 10 Gew.-%, bezogen auf die Polymer-Mischung eingesetzt.

In beiden Schriften werden Ethylencopolymere aus Ethylen und Okten eingesetzt. Die Kohäsionskräfte und die Reiß-/Bruchfestigkeit dieser Olefincopolymere sind relativ gering.

Keine der vorstehend aufgeführten Druckschriften gibt Hinweise auf die Verwendungsmöglichkeit von Polyolefin-Heizschmelzklebemassen für den Einsatz als Befestigungsmaterial, insbesondere als Dübel.

Die vorliegende Erfindung betrifft daher Zusammensetzungen enthaltend
a) ein oder mehrere Polyolefine, die
   - einen Erweichungspunkt Ring/Kugel im Bereich von 50 bis 165°C,
   - eine Schmelzviskosität, gemessen bei einer Temperatur von 170°C, im Bereich von 20 bis 40 000 mPa·s und
   - eine Glasübergangstemperatur T_{g} von maximal -10°C besitzen
   und
b) einen oder mehrere anorganische Füllstoff/e.

Die Polyolefine werden durch Polymerisation von Ethylen und Propylen in Gegenwart von Metallocenen als Katalysator hergestellt und weisen bevorzugt einen Schmelzflussindex MFI von mehr als 30 g/10 min, gemessen nach ISO 1133 bei einer Temperatur von 190 °C und einem Auflagegewicht von 2,16 kg auf.

Die erfindungsgemäßen Zusammensetzungen zeichnen sich vorteilhaft dadurch aus, dass sie eine sehr kurze Abbindezeit (set time) aufweisen, ohne einen Verlust an Adhäsions- und Kohäsionskraft zu erleiden, ferner zeigen sie eine verbesserte Zugfestigkeit (tensile N) und Steifheit (elongation), ohne spröde zu sein, sowie ein günstiges Viskositätsverhalten. Sie sind toxikologisch und ökologisch unbedenklich und in einfacher Weise zu handhaben.

Ein weiterer Vorteil der erfindungsgemäßen Zusammensetzungen ist deren Temperaturbeständigkeit auch bei Temperaturen unterhalb von 0°C.

Die anorganischen Füllstoffe sind ausgewählt aus Kreiden, natürliche gemahlene oder gefällte Calciumcarbonaten, Calcium-Magnesium-Carbonaten, Calciumoxid, Silicaten, Schwerspat, Vermiculit, Glimmer, Talk, Schichtsilikaten, Graphit oder Russ. Es kann gegebenenfalls zweckmässig sein, dass zumindest ein Teil der Füllstoffe oberflächenvorbehandelt ist.

Bevorzugte Ausführungsformen der erfindungsgemäß verwendeten Zusammensetzungen enthalten als Füllstoff Calciumcarbonat.

Die Zusammensetzung enthält 61 bis 89 Gew.% Polyolefin (a) und 11 bis 39 Gew.% Füllstoff (b), bezogen auf das Gesamtgewicht von (a) und (b). Außerordentlich bevorzugt 65 bis 85 Gew.% Polyolefin zu 15 bis 35 Gew.% Füllstoff. Bevorzugt enthalten die erfindungsgemäß verwendeten Zusammensetzungen die oben genannten Polyolefin/e mit Schmelzviskositäten, gemessen bei einer Temperatur von 170 °C, von 50 bis 30 000 mPa·s, besonders bevorzugt 100 bis 20 000 mPa·s.

In einer bevorzugten Ausführungsform werden Polyolefine mit einer zahlenmittleren Molmasse Mₙ im Bereich von 500 und 20 000 g/mol, bevorzugt im Bereich von 800 und 10 000 g/mol, besonders bevorzugt im Bereich von 1000 und 5000 g/mol und einer gewichtsmittleren Molmasse M_{w} im Bereich von 1000 und 40 000 g/mol, bevorzugt im Bereich von 1600 und 30 000 g/mol, besonders bevorzugt im Bereich von 2000 und 20 000 g/mol eingesetzt. Die Bestimmung der Molmasse erfolgt gelpermeationschromatographisch.

Die erfindungsgemäßen Zusammensetzungen enthalten insbesondere Polyolefine, die aus Homopolymeren des Propylens oder Copolymeren aus Propylen und Ethylen ausgewählt sind, wobei die Copolymeren vorzugsweise zu 70 bis 99,9, besonders bevorzugt zu 80 bis 99 Gew.-%, aus einer Olefinart bestehen.

In einer weiteren bevorzugten Ausführungsform enthalten die Zusammensetzungen Copolymere aus Propylen und Ethylen, wobei der Gehalt an Struktureinheiten, hervorgegangen aus Propylen, 61 Gew.-% bis 99,9 Gew.-%, bevorzugt 70 bis 99, besonders bevorzugt 80 bis 95 Gew.-% beträgt.

Weiter enthalten die erfindungsgemäßen Zusammensetzungen zusätzlich zu den Komponenten a) und b) noch die Komponente c), wobei c) für ein oder mehrere polar modifizierte Copolymerwachse, hergestellt durch Umsetzung des Polyolefins a) mit einer α,β-ungesättigten Carbonsäure oder deren Derivaten in Gegenwart von Radikalbildnern steht.

Die unter c) genannten polar modifizierten Copolymerwachse können nach der in EP 0 941 257 beschriebenen Methode hergestellt werden.

Bevorzugt sind polar modifizierte Copolymerwachse, die sich ableiten aus Polyolefinen, bevorzugt aus Polypropylen, modifiziert mit Maleinsäureanhydrid.

Die erfindungsgemäßen Zusammensetzungen aus den Komponenten a) und b) oder a), b) und c) können bei der Verwendung als Baumaterialien oder Verbindungselementen ohne weitere Zusatzstoffe zum Einsatz kommen oder eine oder mehrere Klebekomponente(n), ausgewählt aus der Gruppe der Harze enthalten.

In Betracht kommen aliphatische und cycloaliphatische oder aromatische Kohlenwasserstoffharze. Diese können durch Polymerisation bestimmter Harzölfraktionen hergestellt werden, die bei der Aufbereitung von Erdöl anfallen. Derartige Harze, die z. B. durch Hydrierung oder Funktionalisierung modifiziert werden können, sind beispielsweise unter den Handelsnamen Eastoflex, RegalREZ, Kristalex, Eastotac, Piccotac (Eastman Chemical Company) oder Escorez (ExxonMobil Chemical Company) erhältlich. Weiter kommen als Harze PolyterpenHarze in Betracht, hergestellt durch Polymerisation von Terpenen, beispielsweise Pinen in Gegenwart von Friedel-Crafts-Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate sowie phenol-modifizierte Pentaerithrolester von Harzen und phenol-modifizierte Terpen-Harze.

Die genannten Harze sind in den erfindungsgemäßen verwendeten Zusammensetzungen einzeln oder in beliebiger Kombination in Gewichtsmengen, bezogen auf das Gesamtgewicht der Zusammensetzung, im Bereich von 0 bis 90 Gew.-%, bevorzugt von 10 bis 50 Gew.-%, besonders bevorzugt von 15 bis 40 Gew.-%, enthalten.

In einer ganz besonders bevorzugten Ausführungsform der erfindungsgemäßen Zusammensetzungen enthalten diese eine oder mehrere Klebekomponente/n, ausgewählt aus amorphen Poly-alpha-Olefinen (= APAOs), z.B. den Typen der Vestoplast^{®}-Reihe (Degussa) oder den "Rextac"-Typen der Fa. Huntsman, aliphatischen, cycloaliphatischen oder aromatischen Kohlenwasserstoffharzen, wie sie z. B. unter dem Handelsnamen "Escorez" bei Exxon Mobile erhältlich sind, ferner Polyisobutylen, erhältlich z. B. unter dem Handelsnamen "Oppanol" bei BASF. Weiterhin können auch andere Polyolefine, etwa Niederdruck-Polyethylene, wie sie z. B. unter dem Namen "Affinity" bei Dow Chemical verfügbar sind, enthalten sein, ferner Hochdruckpolyethylene, auch solche mit polaren Comonomeren wie z. B.

Ethylen-Vinylacetat. Die Gesamtmischung der so beschaffenen Zusammensetzungen haben eine Viskosität im Bereich von 100 bis 10 000 mPa·s bei 170 °C, bevorzugt von 120 bis 9000 mPa·s bei 170 °C, besonders bevorzugt von 130 bis 8000 mPa·s bei 170 °C.

Gegebenenfalls können noch Pigmente, Antioxidantien, Geruchsbinder, antimikrobielle Wirksubstanzen oder Farb- und Duftstoffe vorhanden sein.

Für die Herstellung der in den erfindungsgemäß verwendeten Zusammensetzungen enthaltenen Metallocen-Polyolefine werden Metallocenverbindungen der Formel I als Katalysator eingesetzt.

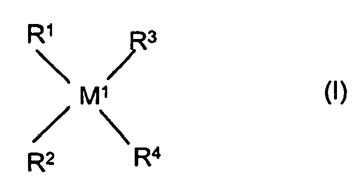

Diese Formel umfasst auch Verbindungen der Formel Ia, 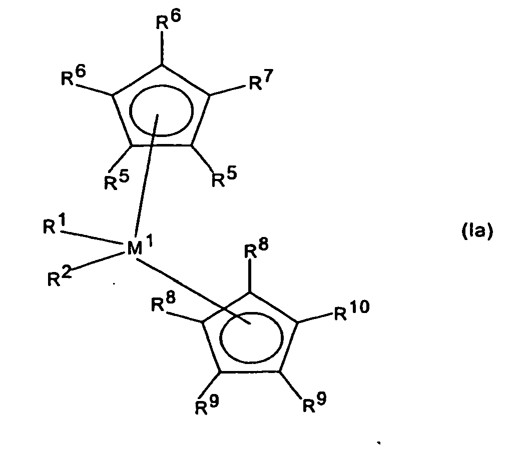 der Formel Ib, 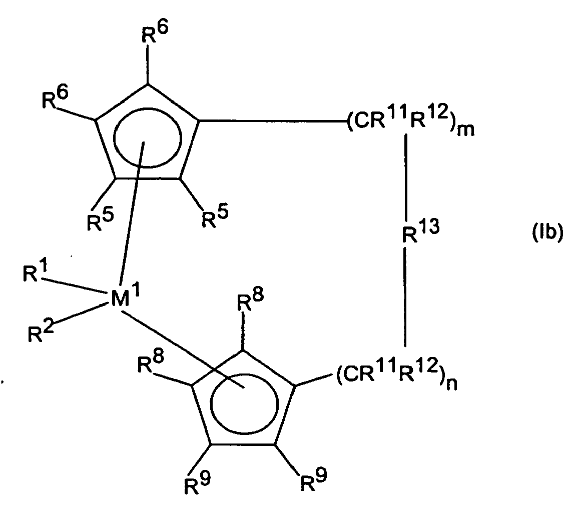 und der Formel Ic.

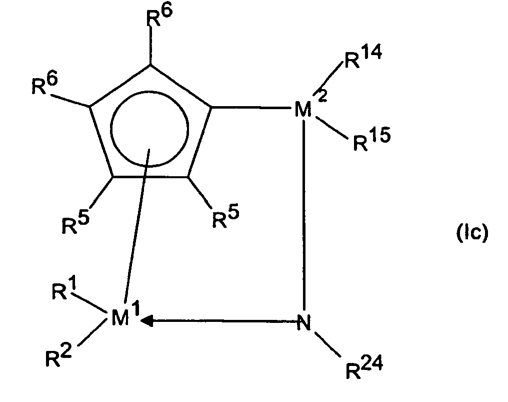

In den Formeln I, la und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 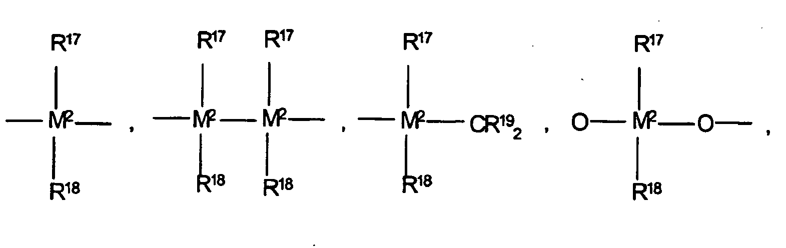 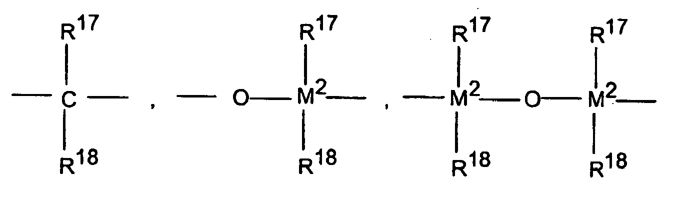 =BR¹⁷, =AlR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Konkrete Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4.,5-benzoindenyl)zirkoniumdichlorid,
Ethylen-bis-1-(2-methyl-4.-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z. B. Triethylaluminium, Tributylaluminium und andere sowie Mischungen aus diesen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Verfahren zur Herstellung derartiger Polyolefine sind beispielsweise im Stand der Technik wie EP-A-0 321 851, EP-A-0 321 852, EP-A-0 384 264, EP-A-0 571 882 und EP-A-0 890 584 beschrieben.

Die erfindungsgemäßen Zusammensetzungen eignen sich für die Verwendung zur Herstellung von Baumaterialien, insbesondere für die Herstellung von Verbindungselementen zur Befestigung von Gegenständen an Flächen, wie z. B. Dübel. Da die Abbindezeiten (set time) der Zusammensetzungen sehr gering sind und im Bereich von < 12 Sekunden, bevorzugt im Bereich von 0,1 bis 10 Sekunden, besonders bevorzugt im Bereich von 0,5 bis 8, außerordentlich bevorzugt im Bereich von 1 bis 5.Sekunden liegen, können die Verbindungselemente in einfacher Weise innerhalb sehr kurzer Zeit montiert werden.

Besonders vorteilhaft sind Zusammensetzungen mit einem Füllstoffanteil unterhalb von 40 Gew.-% bezogen auf die Zusammensetzungen. Das Dehnvermögen bzw die Steifheit der Zusammensetzung, ermittelt durch die Elongation in % ist für den Bestimmungszweck ideal, d.h. es wird eine gute Steifheit erzielt ohne dass die Zusammensetzung spröde ist und beim Eindrehen von Schrauben reißt und bricht. Zusammensetzungen mit sehr hohen Anteilen an Füllstoff zeigen Elongationswerte von 0 % und haben eine hohe Tendenz zur Rissbildung.

### Ausführungsbeispiele

Die nachfolgenden Beispiele sollen die Erfindung näher erläutern, ohne sie jedoch auf die konkret angegebenen Ausführungsformen zu beschränken. Prozentangaben sind, wenn nicht anders angegeben, als Gewichtsprozente zu verstehen.

Die Schmelzviskositäten wurden nach DIN 53019 mit einem Rotationsviskosimeter, die Tropfpunkte nach ASTM D3954, die Erweichungspunkte Ring/Kugel nach ASTM D3104, bestimmt. Das Molmassengewichtsmittel M_{w} und das Molmassenzahlenmittel Mₙ wurden durch Gelpermeationschromatographie bei einer Temperatur von 135 °C in 1,2-Dichlorbenzol ermittelt.

Die Abbindezeit (set time) wird ermittelt, indem 2 Papierstreifen miteinander verklebt werden und die Zeit gemessen wird, innerhalb der man die Papierstreifen zerstörungsfrei ohne Faserausriß trennen kann.

Die Zugfestigkeit (tensile N) wird ermittelt, indem ein Prüfkörper mit einer Dicke von 500 µm einer Zugkraft ausgesetzt wird und die Kraft gemessen wird bei der der Prüfkörper reißt.

Die Dehnung (elongation %) ist die Dehnfähigkeit bis zum Reißen des Prüfkörpers.

Das erfindungsgemäß eingesetzte Propylen-Polymer Licocene PP 2602® TP wurde nach dem im Stand der Technik gemäß EP 0 384 264 angegebenen Verfahren hergestellt.

| Formulierung 1 (F1) | |
|---|---|
| Licocene PP 2602^{®} TP | 30 % |
| Snowcal 70 | 65 % |
| Licocene PP MA 6252 TP | 5 % |

| Vergleichs-Formulierung 1 (V-F1) | |
|---|---|
| Licocene PP 2602^{®} TP | 85,7 % |
| Licocene PP MA 6252 TP | 14,3 % |

| Formulierung 2 (F2) | |
|---|---|
| Licocene PP 2602^{®} TP | 76,3 % |
| Snowcal 70 | 11 % |
| Licocene PP MA 6252 TP | 13,7 % |

| Formulierung 3 (F3) | |
|---|---|
| Licocene PP 2602^{®} TP | 62,3 % |
| Snowcal 70 | 39 % |
| Licocene PP MA 6252 TP | 9,7 % |

Allgemeine Herstellweise: Die eingesetzten Polymere werden bei 200 °C aufgeschmolzen. Anschließend wird unter Rühren der Füllstoff zugegeben und weiter gerührt, bis die gesamte Füllstoffmenge vom Polymer aufgenommen wurde.

**Tabelle 2: Formulierung (F1 bis F3) und Vergleichs-Formulierung (V-F1) mit resultierenden Viskositäten, Abbindezeiten (set time), Zugfestigkeiten (tensile N) und Dehnvermögen (elongation)**

| F, VF | Viskosität, 180 °C [mPa•s] | set time [sec.] | tensile N [N] | elongation [%] |
|---|---|---|---|---|
| F 1 | 11160 | 3 | 2,8 | 0 |
| V-F 1 | 3870 | 15 | 1,6 | 600 |
| F2 | 3810 | 10 | 0,9 | 32 |
| F3 | 6350 | 5 | 1,3 | 13 |

Die Prüfergebnisse zeigen eine sehr starke Reduzierung der Abbindezeit durch den Füllstoff Snowcal 70 (CaCO₃) sowie eine deutliche Erhöhung der Zugfestigkeit und/oder der Steifheit. Für Zusammensetzungen mit einem hohen Füllstoffanteile (F1) wurde ein Wert für die Elongation von 0 % gefunden, der auf eine große Sprödigkeit der Zusammensetzung hin deutet.

Charakterisierung der eingesetzten Handelsprodukte:
Licocene PP MA 6252 TP: Polypropylen, gepfropft mit Maleinsäureanhydrid, Clariant Produkte (Deutschland) GmbH.
Licocene PP 2602^{®} TP: Propylen-Polymer, Clariant Produkte (Deutschland) GmbH
Snowcal 70: Calciumcarbonat, Omya

## Patentansprüche

1. Zusammensetzungen, geeignet für die Herstellung von Baumateriallen, enthaltend
a) ein oder mehrere Polyolefine, die durch Polymerisation von Ethylen und Propylen in Gegenwart von Metallocen als Katalysator hergestellt wurden und die
• einen Erwelchungspunkt Ring/Kugel Im Bereich von 60 bis 165 °C,
• eine Schmelzviskosltät, gemessen bei einer Temperatur von 170 °C, im bereich von 20 bis 40 000 mPa·s und
• eine Glasübergangstemperatur T_{g} von maximal -10 °C besitzen,
b) einen oder mehrere anorganische Füllstoff/e ausgewählt aus Kreiden, natürlichen gemahlenen oder gefällten Calclumcarbonaten, Calcium-Magnesium-Carbonaten. Calciumoxid, Silicaten, Schwerspat, Graphit, Russ oder Vermiculit, Glimmer, Talk oder Schichtailikaten,
**dadurch gekennzeichnet, dass** sie Polyolefine der Komponente a) in einer Menge von 61 bis 89 Gew.-% enthält und die Füllstoffe der Komponente b) in einer Menge von 11 bis 39 Gew.-%, bezogen auf das Gesamtgewicht von a) und b), und dass sie zusätzlich
c) ein oder mehrere polar modifizierte Copolymerwachse enthält, hergestellt durch Umsetzung des Polyolefins a) mit einer alpha/beta-ungesättigten Carbonsäure oder deren Derivaten in Gegenwart von Radikalbildnem.

2. Zusammensetzung nach Anspruch 1, **dadurch gekennzeichnet, dass** die Polyolefine einen Schmelzflussindex MFI von mehr als 30 g/10 min, gemessen nach ISO 1133 bei einer Temperatur von 190 °C und einem Auflagegewicht von 2,16 kg, besitzen.

3. Zusammensetzung nach Anspruch 1 oder 2, **dadurch gekennzeichnet, dass** sie zusätzlich 0 bis 90 Gew.-% aliphatische und cycloallphatische oder aromatische Kohlenwasserstoffharze, bezogen auf das Gesamtgewicht der Zusammensetzung, enthält.

4. Zusammensetzung nach Anspruch 3, **dadurch gekennzeichnet, dass** diese eine Viskosität im Bereich von 100 bis 10 000 Pa·s bei 170 °C besitzt.

5. Verwendung der Zusammensetzung nach einem der Ansprüche 1 bis 4, zur Herstellung von Baumaterialien, insbesondere für die Herstellung von Verbindungselementen zur Befestigung von Gegenständen an Flächen, insbesondere Dübeln.

6. Verwendung nach Anspruch 5, **dadurch gekennzeichnet, dass** die Zusammensetzung in heißer flüssiger Form in einen im Baumaterial vorhandenen oder vorbereiteten Hohlraum eingespritzt wird, dass sie den Hohlraum komplett ausfüllt und am Baumaterial durch Benetzung der Innenwand des Hohlraums haftet und dass dann in die noch elastische Masse eine Schraube eingedreht wird.

## Claims

1. A composition which is suitable for producing building materials and comprises
a) one or more polyolefins which have been prepared by polymerization of ethylene and propylene in the presence of metallocene as catalyst and have
• a ring/ball softening point in the range from 50 to 165°C,
• a melt viscosity measured at a temperature of 170°C in the range from 20 to 40 000 mPa·s and
• a glass transition temperature T_{g} of not more than -10°C
b) one or more inorganic filler(s) selected from among chalks, natural milled or precipitated calcium carbonates, calcium-magnesium carbonates, calcium oxide, silicates, barite, graphite, carbon black and vermiculite, mica, talc and sheet silicates,
wherein the composition contains polyolefins of the component a) in an amount of from 61 to 89% by weight and the fillers of the component b) in an amount of from 11 to 39% by weight, based on the total weight of a) and b), and additionally contains
c) one or more copolymer waxes which have been modified so as to make them polar and have been prepared by reacting the polyolefin a) with an alpha/beta-unsaturated carboxylic acid or derivatives thereof in the presence of free-radical formers.

2. The composition as claimed in claim 1, wherein the polyolefins have a melt flow index MFI of more than 30 g/10 min, measured in accordance with ISO 1133 at a temperature of 190°C and a load of 2.16 kg.

3. The composition as claimed in claim 1 or 2 which additionally contains from 0 to 90% by weight of aliphatic and cycloaliphatic or aromatic hydrocarbon resins, based on the total weight of the composition.

4. The composition as claimed in claim 3 which has a viscosity in the range from 100 to 10 000 mPa·s at 170°C.

5. The use of the composition as claimed in any of claims 1 to 4 for producing building materials, in particular for the production of connecting elements for fastening articles to surfaces, in particular pegs.

6. The use as claimed in claim 5, wherein the composition is injected in hot liquid form into a hollow space which is present or has been provided in the building material so that it completely fills the hollow space and adheres to the building material by wetting of the interior wall of the hollow space and a screw is then screwed into the still elastic composition.

## Revendications

1. Composition, appropriée pour la préparation de matériaux de construction, contenant
a) une ou plusieurs polyoléfines, qui ont été préparées par polymérisation d'éthylène et de propylène en présence de métallocène comme catalyseur et qui présentent
- un point de ramollissement anneau/bille dans la plage de 50 à 165°C,
- une viscosité en masse fondue, mesurée à une température de 170°C, dans la plage de 20 à 40 000 mPa.s et
- une température de transition vitreuse T_{g} d'au maximum -10°C,
b) une ou plusieurs charges inorganiques, choisies parmi les craies, les carbonates de calcium naturels, broyés ou précipités, les carbonates de calcium-magnésium, l'oxyde de calcium, les silicates, la baryte, le graphite, la suie ou la vermiculite, le mica, le talc ou les silicates à couches,
**caractérisée en ce qu'**elle contient des polyoléfines du composant a) en une quantité de 61 à 89% en poids et les charges du composant b) en une quantité de 11 à 39% en poids, par rapport au poids total de a) et b) et **en ce qu'**elle contient en plus
c) une ou plusieurs cires copolymères modifiées de manière polaire, préparées par transformation de la polyoléfine a) avec un acide carboxylique alpha/bêta-insaturé ou ses dérivés en présence d'agents de formation de radicaux.

2. Composition selon la revendication 1, **caractérisée en ce que** les polyoléfines présentent un indice de fluidité à chaud MFI de plus de 30 g/10 min, mesuré selon la norme ISO 1133 à une température de 190°C et un poids appliqué de 2,16 kg.

3. Composition selon la revendication 1 ou 2, **caractérisée en ce qu'**elle contient en outre 0 à 90% en poids de résines hydrocarbonées aliphatiques et cycloaliphatiques ou aromatiques, par rapport au poids total de la composition.

4. Composition selon la revendication 3, **caractérisée en ce qu'**elle présente une viscosité dans la plage de 100 à 10 000 Pa.s à 170°C.

5. Utilisation de la composition selon l'une quelconque des revendications 1 à 4 pour la préparation de matériaux de construction, en particulier pour la préparation d'éléments d'assemblage pour la fixation d'objets sur des surfaces, en particulier de chevilles.

6. Utilisation selon la revendication 5, **caractérisée en ce que** la composition est injectée sous forme chaude, liquide, dans un espace creux présent ou préparé dans un matériau de construction, **en ce qu'**elle remplit complètement l'espace creux et adhère au matériau de construction par mouillage de la paroi intérieure de l'espace creux et **en ce qu'**une vis est ensuite vissée dans la masse encore élastique.
